Europäisches Patentamt

European Patent Office

Office européen des brevets

(11) Publication number: **0 090 894**
**B1**

(12) **EUROPEAN PATENT SPECIFICATION**

(45) Date of publication of patent specification: 06.05.87

(51) Int. Cl.⁴: **G 07 D 9/04, G 01 G 19/42**

(21) Application number: **82304969.7**

(22) Date of filing: **21.09.82**

(54) Evaluation devices.

(30) Priority: **02.04.82 JP 54945/82**

(43) Date of publication of application:
**12.10.83 Bulletin 83/41**

(45) Publication of the grant of the patent:
**06.05.87 Bulletin 87/19**

(84) Designated Contracting States:
**CH DE FR GB IT LI NL SE**

(56) References cited:
**EP-A-0 040 539**
**GB-A-2 027 914**
**GB-A-2 115 163**

(73) Proprietor: **KABUSHIKI KAISHA ISHIDA KOKI
SEISAKUSHO
44, Shogoin Sannou-cho Sakyo-ku
Kyoto-shi Kyoto 606 (JP)**

(72) Inventor: **Hikita, Michiyasu
No. 18-17 Higashiyagura s-chome
Kusatsu-shi Shiga (JP)**

(74) Representative: **Arthur, Bryan Edward et al
Withers & Rogers 4 Dyer's Buildings Holborn
London EC1N 2JT (GB)**

Courier Press, Leamington Spa, England.

## Description

This invention relates to evaluation devices, particularly for use in places where large amounts of money are handled, for example banks, casinos or department stores.

In a conventional coin counter, for instance, coins are fed into a hopper and detected one by one by the use of counting means such as a photosensor. This is a time consuming way of counting the total number of coins.

Another way is to use a counting scale upon which the total weight of coins is divided by the weight of one coin so that the number of coins can be found. Several kinds of coins are of course in use in this country and so the unit weight has to be reset corresponding to the kind of coin each time a different type of coin is counted. This can be troublesome for the operators. Also, these two counters can count the total number of coins, but not the total sum of money involved.

An object of the invention is to overcome these problems. Another object of the invention is to provide a coin counter which can count and display the total sum of money rather than the total number of coins. Another object of the invention is to provide a coin counter which can audibly or visually judge whether or not the total sum of coins is included in a preestimated range. A further object of the invention is to provide a coin counter in which the type of key being counted does not have to be entered when only a few kinds of coins are being counted so that new data does not have to be entered each time a new type of coin is to be counted. A still further object of the invention is to provide a coin counter which can print out grand totals and sub-totals on demand.

In published European Patent Application No. 0 040 539 an apparatus and method are described for measuring the number and/or value of an unknown quantity of articles in which computing the quotient of the total weight of the articles divided by the average unit weight is computed and a warning is given if the quotient differs from the nearest whole number by more than a predetermined deviation.

In GB 2027914A a quantity verifying apparatus is described in which a batch of like bank notes or coins is weighed and the declared value of the notes or coins and the weight data obtained are analysed using a stored weight-value factor, and the actual value may be computed from the weight data and stored factor. Means for determining and displaying deviation of the declared value from the computed value may be provided.

According to this invention, there is provided an evaluation device for obtaining the total value of a plurality of identical items, comprising a weighing device (1), for measuring the total weight of the plurality of items, a memory (3) for storing data including the unit weight and the unit value of the or each category of identical items to be evaluated, reading means (41) for recalling the appropriate unit weight and unit value data from the memory (3) in response to instructions, calculating means (42) for evaluating the total value of the items from the total weight of the items obtained from the weighing device (1) and the unit weight and unit value data, display means (5, 6) for displaying the evaluation, characterised by a range setting means (43) which employs, an upper limit entry means and a lower limit entry means to store a preestimated range of acceptable evaluations, and means (44) for comparing the actual evaluation with the preestimated range.

In this invention unit data including the unit weight of an item to be counted and the unit values of various items is stored in a memory. In the case of coins, keys are operated to evaluate the total sum of the coins placed on a weighing scale, from the unit weight and unit value data recalled and the total weight obtained from the weighing scale, and the evaluation result is displayed by a display unit and/or a printer. A checking mechanism is provided to make it possible to audibly or visually judge whether or not the evaluation is included within a preestimated range.

Embodiments of the invention are described by way of example, with reference to the drawings, in which:

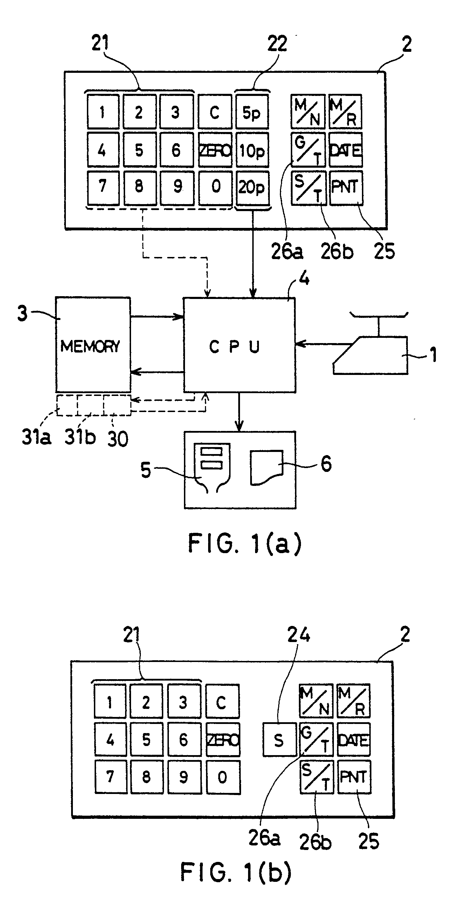

Figure 1-(a) is a schematic block diagram of a coin counter;

Figure 1-(b) is a view of a modified coin counter, which has a different keyboard to that in the Figure 1-(a);

Figure 2 is a schematic flow chart of a central processing unit in Figure 1;

Figure 3 is a detailed flow chart based on the Figure 2 flow chart;

Figure 4-(a) is a schematic block diagram of the coin counter of the invention, which can audibly or visually check the total sum of coins;

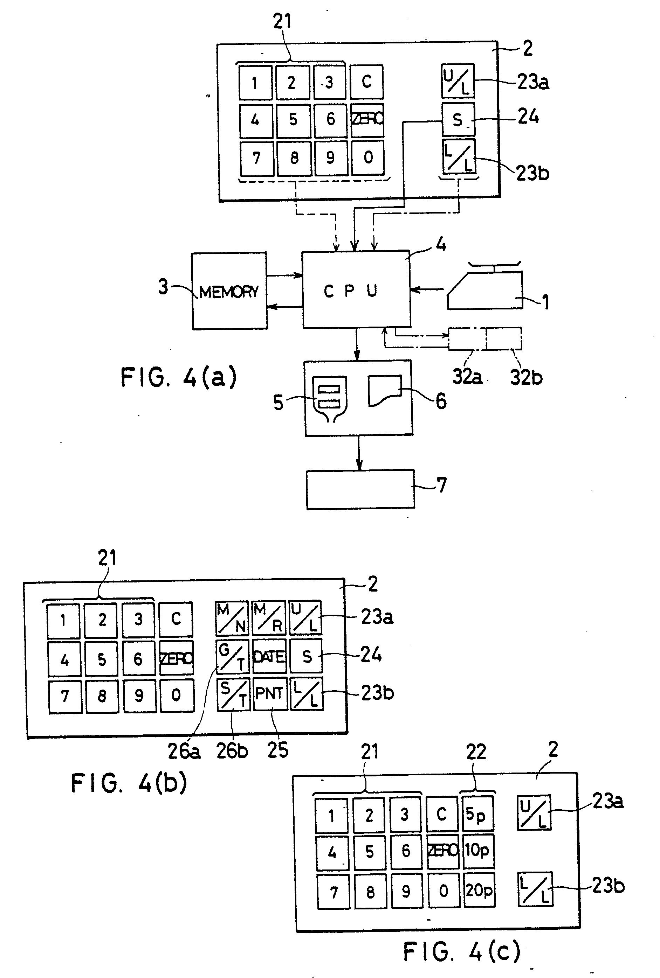

Figure 4-(b) is a view of another embodiment having a different keyboard from Figure 4-(a);

Figure 4-(c) is a view of a further modified embodiment having a different keyboard from Figures 4-(a) and -(b);

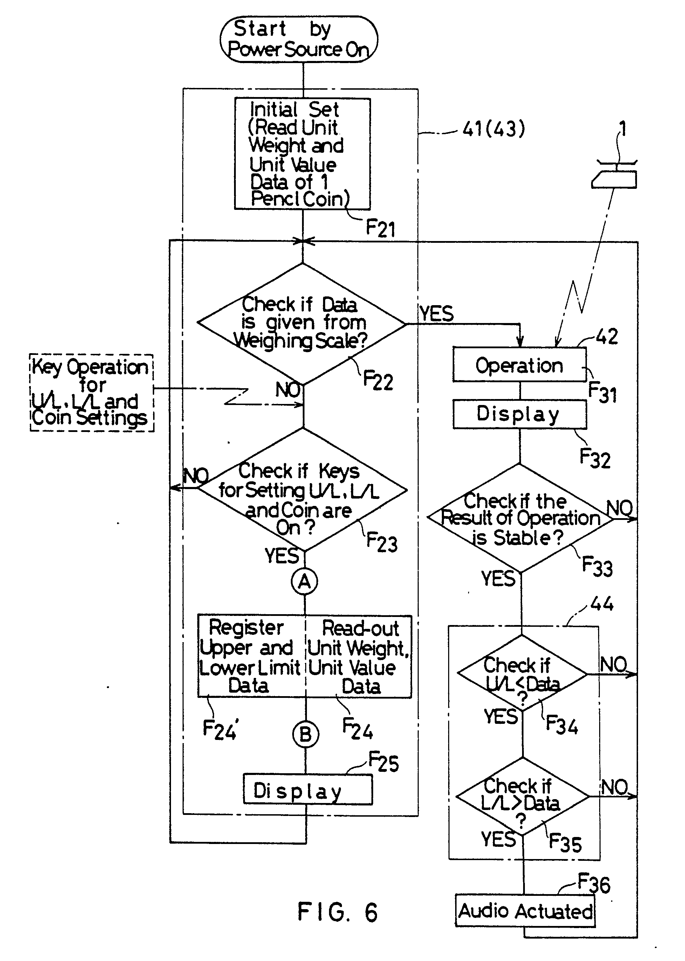

Figure 5 is a flow chart giving an outline of operation of the central processing unit in Figure 4;

Figure 6 shows the Figure 5 flow chart in detail;

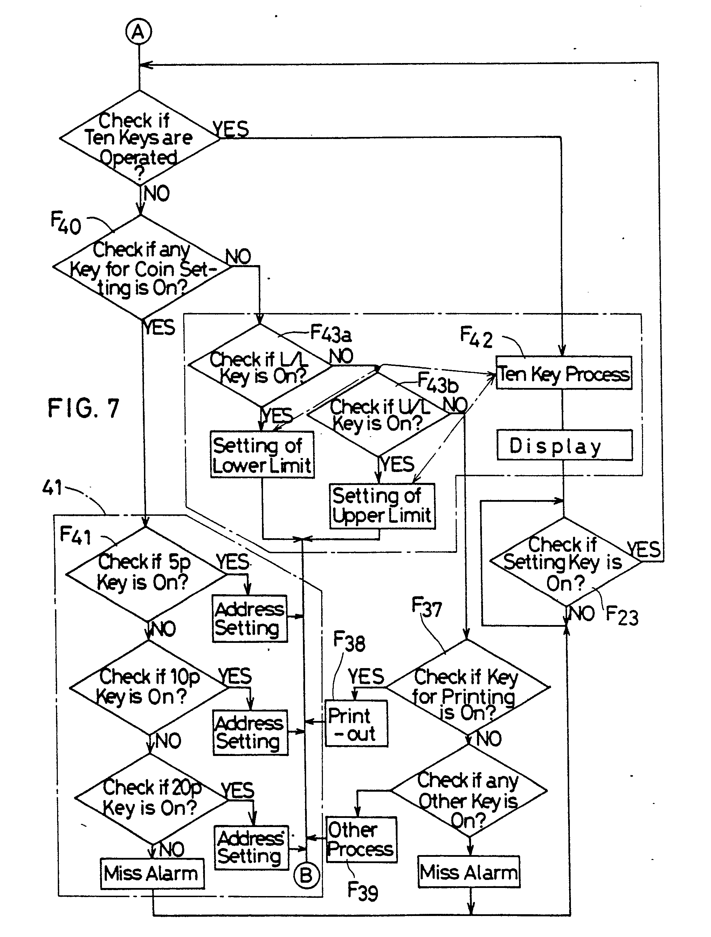

Figure 7 is a flow chart showing key operations in detail; and

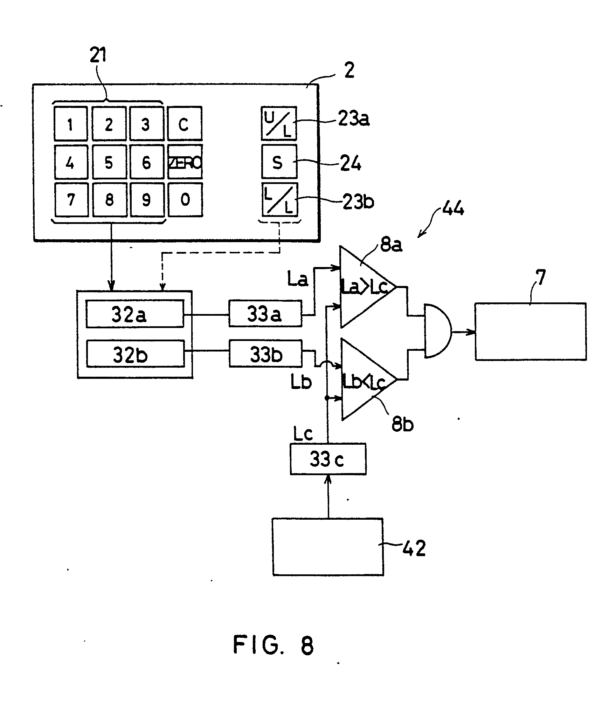

Figure 8 illustrates exemplary hardware applied to the invention.

In a coin counter an electronic weighing scale 1 is employed using sensing means, such as load cells, as shown in Figure 1-(a). Input keys are provided on a keyboard 2, which each represent different coins 22, such as a 5 pence key, 10 pence key and 20 pence key, as shown in Figure 1.

A coin selecting key 21 as well as numeric keys, are provided, as shown in Figure 1-(b), so that, the required coin value may be selected. For example, when one pence is intended to be selected, a "1" key and coin setting key "S" 24, are pushed. When ten pence is selected, similarly the keys are adapted to be pushed in the order of "1", "0", "S", and when fifty pence is intended to be selected, the keys are to be pushed in the order to "5", "0", "S".

In Figures 1-(a) and -(b), a clear key, "C", is for clearing an inputted value or a displayed value and a "zero" key is used for the zero adjustment of the weighing scale. In Figure 1-(a), a "DATE" key is used for the date input and a key "M/N" for the machine number input. Three keys 25, 26a and 26b are for actuating a printer 6, to be discussed below.

A memory 3 stores data as to unit weights and unit values of various types of coin. When a read only memory (ROM) is used as memory 3, the stored data of the unit weights and unit values cannot be readily changed, but when a random access memory (RAM) is used, the numeric or "ten" keys 21 can be used to easily change the data to thereby cope with changing the stored data e.g. for different national currencies. A display unit 5 and a printer 6 are used to display or record the results by the central processing unit to be discussed below.

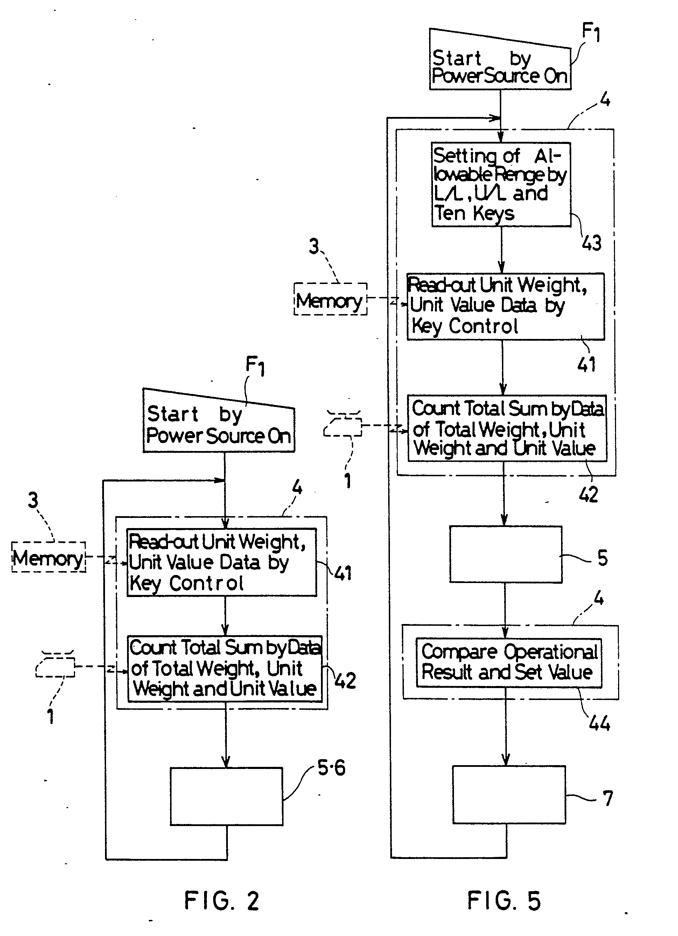

The central processing unit 4 incorporates therein a read means (41) and calculating means 42, which are programmed as shown in Figure 2 flow chart. As shown in Figure 2, firstly, (i) the power source is switched on to start the program (F1) and then (ii) a desired coin key 22 is pushed corresponding to the type coin to be placed on weighing scale 1, or the numeral keys 21 and coin setting key 24 are used to select the kind of coins to be counted, whereby reading means 41 is actuated to recall from the memory 3 the unit weight data and the unit value data (for example, the value of one pence), and (iii) in this case, when the coins are placed on the weighing scale 1, calculating means 42 is actuated so that the central processing unit 4 derives an evaluation according to the following equation:

$$\text{Total value} = \frac{\text{Total weight}}{\text{Unit weight}} \times \text{Unit value}$$

Thus, the total sum of the coins placed on weighing scale 1 is calculated from the measured weight and the memorised data and the result is shown on display unit 5 and/or printer 6.

Counters constructed in this way can count a large amount of coins quickly at places where a large amount of coins is handled for instance a bank or casino. The counting result is displayed on display unit 5, at which time a print key 25 is pushed to allow the printer 6 to print out the result. The printer 6 of course can print out the weighing result registered in a register 30 by pushing print key 25 on every weighing. The result from each weighing may be sequentially added to be added to registers 31a, 31b, so that a grand total key 26a may be pushed to read out the grand total, e.g. after a specified time such as once a day, from register 31a and then print it out. A sub-total key 26b may be pushed every so often, e.g., every hour, at an interval between the operations of grand total key 26a. The sub-total for the time period is read out of the register 31b and may be printed out.

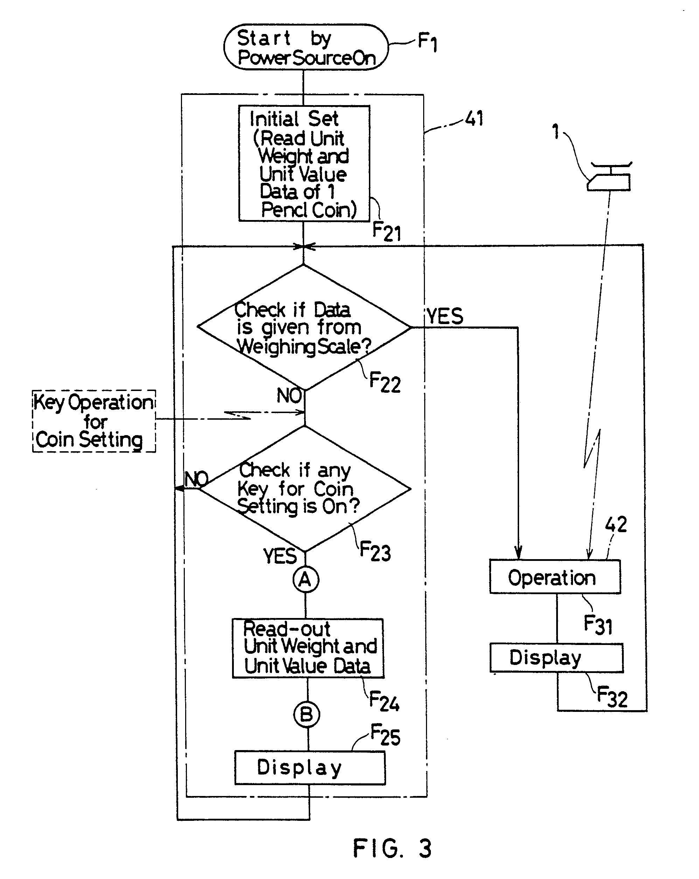

As shown in Figure 3, a power source is switched on (F1) to start the program. In order to actuate reading means 41, a desired coin key 22, or a ten-key 21 and the coin setting key 24 are used as shown in Figure 2. The reading means 41, in Figure 3, upon turning on the power source, is actuated automatically. The display unit 5 displays the inputted coin e.g. "one pence" and the unit weight and unit value of a one pence coin are recalled from memory 3 and given to an arithmetic unit 42 (F21). Next, it is checked whether or not data is available from the weighing scale 1 (F22). If not, a particular coin key 22 (excluding the one pence key) is pushed (F23, YES) for input to the central processing unit 4 for processing (F24), and then the display unit 5 displays the particular coin, for example, "5 pence" (F25).

Upon placing a plurality of the same kind of coins on the weighing scale 1 after the aforesaid reading step is completed, the data from weighing scale 1 and memory 3 are used to actuate calculating unit 42 to evaluate the total sum of coins (F31), the result of which is displayed on display unit 5 (F32) and printed out by printer 6 whenever required.

When different kinds of coins are intended to be included in the total sum each kind must be counted separately. The counted coins of each kind are unloaded from weighing apparatus 1 and the coin key 22 or the numeral 21, and the coin setting key 24, are used to set the kind of coins to be next counted (F23) (including the one pence key). Then the coins of the next kind to be counted are placed on weighing scale 1.

The coin counter is convenient for use when the total value to be counted is previously unknown. This kind of counter can also be used for checking purposes, for example, in a bank. The bank may want to check the total sum in the case of a customer who has already counted the money and has calculated the total already. Such checking will be much simplified by using a coin counter in accordance with the invention as shown in Figure 4 and described below.

The keyboard 2, as shown in Figures 4-(a), -(b) and -(c), provides an upper limit key 23a and a lower limit key 23b. The central processing unit 4, as shown in Figure 5 may provide a range setting means 43 capable of setting a permissible range of error of the evaluated sum by use of the upper and lower limit setting keys 23a and 23b and ten-keys 21. The ten-keys 21 followed by the upper limit setting key 23a are pushed to store the allowable upper limit in memory 3 or in a separate register 32a. The ten-keys 21 and then the lower limit setting key 23b are pushed to store the allowable lower limit in memory 3 or in a separate register 32b (F24') (referring to Figure 6).

The CPU, 4 is provided with a comparison means 44 which compares the calculated result with the upper and lower limits and, the output is given to a display unit 7 which can audibly or visually show whether the result is within the allowed range. For example, an acoustic device, such as a buzzer, can be used as the audible checking means or a luminous element, such as a light-emitting diode, as a visual check means. The embodiments in Figures 4-(a) and -(b) can input coins to be counted, by sequentially pushing ten-keys 21 and the coin setting key 24. In Figure 4-(c) the keyboard has a key 22 for the type of coin.

Thus, the coin counter enables an operator to be informed of the comparison result audibly or visually, without looking at the display unit 5.

Figure 6 shows a modified embodiment of the invention, which counts pence coins as in Figure 3 and shows the Figure 5 flow chart in detail. Explanation will now be given of the counting steps different from those in Figure 3. At first, it is necessary to actuate the allowable range setting means 43 and the power source must be turned on to start the program. Thereafter the upper limit key, the lower limit key, and the numerical keys, are used to input the upper and lower limits of the allowable total sum in memory 3 (F'24).

The comparison means 44 judges whether or not the result of the operation is stable, in other words whether or not the weighing scale 1 is stable (F33). Then the comparison means 44 compares the result of operation with the maximum upper limit value and minimum lower limit value (F34, F35), thereby actuating the check unit 7 when the result is between both the values.

In the embodiments in Figures 5 and 6, the result of the operation is only displayed in display unit 5, unless the printer 6 is actuated using the keyboard 2, shown in Figure 4(b). Furthermore, the mode of no comparison display as shown in Figure 3 can be combined with a system employing the same, shown in Figure 6. For example, a read-only-memory incorporating reading means 41 and calculating means 42 in the program is shown in Figure 3 and a read-only-memory incorporating the calculating means, range setting means 43 and comparison means, 44 in the above two means as the program can be provided with the weighing scale 1, memory 3, display and/or printer, and comparison display, so the two ROMs are interchangeable, thereby making it possible to select a coin counter of the comparison sort or not.

Figure 7 is a flow chart of the key operations for actuating the reading means 41, range setting means 43 and printer 6. In reading means 41, a desired one coin key 12 is on (F40, YES), whereby the address of memory 3 storing the data for the corresponding coin is set (F41), and the data of unit weights and values stored in the address can be read out. The range setting means 43, during the setting of upper and lower limit values, operates ten-keys (F42), and before or after the ten-key operation (after, in the Figure 7 flow chart), the upper and lower limit setting keys 23a and 23b are pushed (F43a, F43b), according to the invention.

Furthermore, a print key 25 corresponds to the register 30 which registers the result of operation by arithmetic unit 42, a grand total key 26a corresponds to the register 31a, and a sub-total key 26b corresponds to the register 31b. Thus, one of three keys 25, 26a and 26b, is pushed (F37) to read out the content of the corresponding one of three registers 30, 31a and 31b, which is then displayed (F38).

Also, a "M/N" key and ten-keys 21 on keyboard 2, are used to enable the registration of machine number, and a "DATE" key and ten-keys 21, are also used to enable inputting of the date (F39).

Hardware equivalents to the central processing unit 4 may of course be substituted for the reading means 41, calculating means 42 and comparison means 43.

Figure 8 shows the hardware for feeding comparison display unit 7 by use of a comparison means 44. Firstly, the upper limit value and lower limit value La and Lb input by use of ten-keys 21 and upper and lower limit setting keys 23a and 23b are added to the upper limit register 32a and lower limit register 32b. When the output of the scale is stabilized, the contents of the two registers 32a and 32b and the result of operation by arithmetic means 42 are shifted to comparison registers 33a, 33b, and 33c respectively, and then two comparators 8a and 8b for comparing the upper and lower limits are used to check $La > Lc$ and $Lb < Lc$ thereby feeding the comparison/display unit, where $Lc$ is the calculated value.

As seen from the above, the evaluation device of the invention stores unit weights and unit values of e.g. coins in a memory so as to be able to display or record the grand total value of coins placed on the weighing scale, whereby the total value of a plurality of coins can be found in an extremely short time. Also, it is possible to find the total sum after predetermined intervals of time.

As a coin counter, it can display whether or not the total value of the coins is included in a preestimated range. This display can be audible thereby being advantageous in that the counting work is performable without the need for observation of the display unit.

The principle of operation of the evaluation device according to this invention could be employed in counting any kind of item of which an evaluation of the total value of a plurality of identical such items required, for example confectionery such as bars of chocolate, motor vehicle accessories and hardware, such as nuts, bolts, screws or nails, haberdashery such as buttons and so on and so forth.

Although the invention has been described with reference to several different embodiments, these embodiments are merely exemplary and not to be taken as limiting the scope of the invention which is defined by the appended claims.

**Claims**

1. An evaluation device for obtaining the total value of a plurality of identical items, comprising a weighing device (1), for measuring the total weight of the plurality of items, a memory (3) for storing data including the unit weight and the unit value of the or each category of identical items to be evaluated, reading means (41) for recalling the appropriate unit weight and unit value data from the memory (3) in response to instructions, calculating means (42) for evaluating the total value of the items from the total weight of the items obtained from the weighing device (1) and the unit weight and unit value data, display means (5, 6) for displaying the evaluation, characterised by a range setting means (43) which employs, an upper limit entry means and a lower limit entry means to store a preestimated range of acceptable evaluations, and means (44) for comparing the actual evaluation with the preestimated range.

2. An evaluation device according to claim 1, further including means (7) for displaying the comparison result.

3. An evaluation device according to claim 1 or 2, wherein the memory (3) is a read only memory or a random access memory.

4. An evaluation device according to any one of claims 1 to 3, wherein the calculating means (42) together with the range setting means (43) and the comparison means (44) are assembled in a read only memory.

## Patentansprüche

1. Abschätzvorrichtung zum Ermitteln des Gesamtwertes einer Mehrzahl identischer Teile, mit einer Wiegevorrichtung (1) zum Messen des Gesamtgewichts der Mehrzahl von Teilen, einem Speicher (3) zum Speichern von Daten einschließlich des Einheitsgewichts und des Einheitswertes der oder jeder Kategorie von abzuschätzenden identischen Teilen, einer Leseeinrichtung (41) zum Abrufen des passenden Einheitsgewichts und Einheitswertes aus dem Speicher (3) als Antwort auf einen Befehl, einer Recheneinrichtung (42) zur Ermittlung des Gesamtwertes der Teile aus dem mit der Wiegeeinrichtung (1) gewonnenen Gesamtgewicht der Teile und dem Einheitsgewicht und dem Einheitswert, einer Anzeigeeinrichtung (5, 6) zum Anzeigen des abgeschätzten Wertes, gekennzeichnet durch eine Bereichseinstelleinrichtung (43), die eine Eingangseinrichtung für einen oberen Grenzwert und eine Eingangseinrichtung für einen unteren Grenzwert zum Speichern eines vorabgeschätzten Bereiches annehmbarer Abschätzungen verwendet, und durch eine Einrichtung (44) zum Vergleichen der tatsächlichen Abschätzung mit dem vorabgeschätzten Bereich.

2. Abschätzvorrichtung nach Anspruch 1, die weiterhin eine Einrichtung (7) zum Anzelgen des Vergleichsergebnisses enthält.

3. Abschätzvorrichtung nach Anspruch 1 oder 2, bei welcher der Speicher (3) ein Festwertspeicher oder ein Randomspeicher ist.

4. Abschätzvorrichtung nach einem der Ansprüche 1 bis 3, bei welcher die Recheneinrichtung (42) zusammen mit der Bereichseinstelleinrichtung (43) und der Vergleichseinrichtung (44) in einem Festwertspeicher zusammengefaßt ist.

## Revendications

1. Dispositif d'évaluation pour obtenir une valeur totale d'une pluralité d'articles identiques, comprenant un dispositif de pesage (1) pour mesurer le poids total d'une pluralité d'articles, une mémoire (3) pour mémoriser des données y compris le poids unitaire et la valeur unitaire de la ou de chaque catégorie d'articles identiques à évaluer, un moyen de lecture (46) pour appeler les données appropriées de l'unité de poids et de l'unité de valeur de la mémoire (3) en réponse à des instructions, un moyen de calcul (42) pour évaluer la valeur totale des articles à partir du poids total des articles obtenu du moyen de pesage (1) et des données de l'unité de poids et de l'unité de valeur, un moyen d'affichage (5, 6) pour afficher l'évaluation, caractérisé par un moyen (13) d'ajustement de zones qui emploie un moyen d'entrée à limite supérieure et un moyen d'entrée à limite inférieure pour mémoriser une bande préestimée d'évaluations acceptables, et un moyen (44) pour comparer l'évaluation réelle avec la zone préestimée.

2. Dispositif d'évaluation selon la revendication 1, comprenant en outre un moyen (7) pour afficher le résultat de la comparaison.

3. Dispositif d'évaluation selon la revendication 1 ou 2, dans lequel la mémoire (3) est une mémoire fixe ou une mémoire vive.

4. Dispositif d'évaluation selon l'une quelconque des revendications 1 à 3, dans lequel le moyen de calcul (42) est assemblé avec le moyen (43) d'ajustement de zones et le moyen de comparaison (44) dans une mémoire fixe.

FIG. 1(a)

FIG. 1(b)

Start by Power Source On — $F_1$

Setting of Al-lowable Renge by L/L, U/L and Ten Keys — 43

Read-out Unit Weight, Unit Value Data by Key Control — 41

Memory — 3

Count Total Sum by Data of Total Weight, Unit Weight and Unit Value — 42

1

5

Compare Operational Result and Set Value — 44

7

Start by Power Source On — $F_1$

Read-out Unit Weight, Unit Value Data by Key Control — 41

Memory — 3

Count Total Sum by Data of Total Weight, Unit Weight and Unit Value — 42

1

5·6

FIG. 2

FIG. 5

# 0 090 894

```
        ┌─────────────────┐
        │   Start   by    │──── F₁
        │ Power Source On │
        └─────────────────┘
                 │
        ┌─────────────────┐
        │  Initial  Set   │──── 41
        │  (Read Unit     │
        │  Weight and     │
        │  Unit Value     │
        │  Data of 1      │
        │  Pencl Coin)    │
        └─────────────────┘   F₂₁
                 │
              ╱──────╲
            ╱ Check if Data╲    YES
           │ is given from   │────────→ ┌───────────┐
            ╲Weighing Scale? ╱          │ Operation │──── 42
              ╲──────╱   F₂₂            └───────────┘
                NO                           │ F₃₁
   ┌────────────┐                       ┌───────────┐
   │Key Operation│                      │  Display  │──── F₃₂
   │    for      │──→                   └───────────┘
   │ Coin Setting│
   └────────────┘
              ╱──────╲
         NO ╱ Check if any ╲
           │  Key for Coin   │
            ╲ Setting is On? ╱
              ╲──────╱   F₂₃
               YES
               (A)
        ┌─────────────────┐
        │  Read-out       │
        │  Unit Weight and│
        │  Unit Value Data│
        └─────────────────┘   F₂₄
               (B)           F₂₅
        ┌─────────────────┐
        │    Display      │
        └─────────────────┘
```

## FIG. 3

3

FIG. 4(a)

FIG. 4(b)

FIG. 4(c)

4

FIG. 6

FIG. 7

FIG. 8